Europäisches Patentamt

European Patent Office

Office européen des brevets

(11) Veröffentlichungsnummer: **0 196 444**
**B1**

(12) **EUROPÄISCHE PATENTSCHRIFT**

(45) Veröffentlichungstag der Patentschrift: **09.05.90**

(51) Int. Cl.⁵: **D 05 B 69/12**

(21) Anmeldenummer: **86102238.2**

(22) Anmeldetag: **20.02.86**

(54) **Elektromotorischer Regel- und Steuerantrieb, insbesondere für Industrie-Nähmaschinen.**

(30) Priorität: **08.03.85 DE 3508310**

(43) Veröffentlichungstag der Anmeldung:
**08.10.86 Patentblatt 86/41**

(45) Bekanntmachung des Hinweises auf die Patenterteilung:
**09.05.90 Patentblatt 90/19**

(84) Benannte Vertragsstaaten:
**AT BE CH DE FR GB IT LI NL SE**

(56) Entgegenhaltungen:
**FR-A-2 374 770**
**GB-A-1 114 366**

(73) Patentinhaber: **Frankl & Kirchner GmbH. & Co. KG Fabrik für Elektromotoren und elektrische Apparate**
**Scheffelstrasse 73**
**D-6830 Schwetzingen (DE)**

(72) Erfinder: **Erndt, Hans**
**Im Hossacker 27**
**D-6908 Wiesloch 5 (DE)**
Erfinder: **Link, Erich**
**Spraulache 14**
**D-6831 Brühl (DE)**
Erfinder: **Martin, Adolf**
**Königsberger Strasse 11**
**D-7512 Rheinstetten 3 (DE)**
Erfinder: **Palloch, Herbert**
**Keplerstrasse 2**
**D-6830 Schwetzingen (DE)**
Erfinder: **Wittler, Hilmar**
**Haid + Neustrasse 114**
**D-7500 Karlsruhe (DE)**

(74) Vertreter: **Rau, Manfred, Dr. Dipl.-Ing. et al**
**Rau & Schneck, Patentanwälte Königstrasse 2**
**D-8500 Nürnberg 1 (DE)**

Courier Press, Leamington Spa, England.

**Beschreibung**

Die Erfindung betrifft einen elektromotorischen Regel- und Steuerantrieb nach dem Oberbegriff des Anspruches 1.

Bei einem derartigen aus der US-A-3 387 157 bekannten Antrieb ist in der der Kupplungsfläche abgewandten, dem Motor zugewandten Seite der Schwungscheibe eine flache ringförmige Ausnehmung ausgebildet, in der Gebläse-Blätter bzw. -Schaufeln angebracht sind, die die Luft durch einen sich radial erstreckenden ringförmigen Kanal bzw. Luftweg radial nach außen fördern, der durch einen im Gehäuse des Motors befestigten als Trennwand wirkenden Luftleitring begrenzt wird. Die Kupplungsfläche ist am äußeren relativ dicken Massering der Kupplungsscheibe ausgebildet, der mittels eines axial gegenüber der Kupplungsfläche ausgeprägt zurückspringenden dünnwandigen Steges mit einer Nabe verbunden ist. Die ringförmige Ausnehmung ist im Übergang dieses Steges zum Massering ausgebildet. Die Kühlung der Schwungscheibe selber und des Raumes um die Schwungscheibe ist hierbei relativ schlecht, zumal die Luftförderwirkung bei dieser Ausgestaltung zu beanstanden ist.

Der Erfindung liegt daher die Aufgabe zugrunde, einen Regel- und Steuerantrieb der gattungsgemäßen Art so auszugestalten, daß eine zufriedenstellende Kühlung der Kupplungs- und Brems-Einheit und zwar insbesondere der thermisch hochbelasteten Schwungscheibe gewährleistet ist.

Diese Aufgabe wird erfindungsgemäß durch die Merkmale des Kennzeichnungsteiles des Anspruches 1 gelöst. Da der Ansaugraum als Ringraum ausgebildet ist und die Nabe der Schwungscheibe umgibt, liegt ein die Nabe mit dem dickeren Außenbereich der Schwungscheibe verbindender Steg auf der Seite der Kupplungs-Brems-Scheibe. Da in diesem verhältnismäßig dünnwandigen Bereich darüber hinaus eine radiale Teil-Überdeckung zwischen dem Ansaugraum und der Kupplungsfläche vorhanden ist, ist eine besonders intensive Kühlung in diesem kritischen Bereich gewährleistet. Durch die Ausgestaltung der Radial-Kanäle ist eine besondere gute Saugleistung des Lüfters und damit insgesamt eine gute Kühlung des Motors und der Kupplungs-Brems-Einheit gewährleistet. Gleichzeitig ist sichergestellt, daß die thermisch hochbelastete Schwungscheibe über einen sehr großen Teil ihrer radialen Erstreckung besonders intensiv mit Kühlluft beaufschlagt wird.

Aus "Technisches Handbuch Verdichter" VEB VERLAG TECHNIK BERLIN, 1983, S. 281 ist es für das Verdichterlaufrad von Kreiselverdichtern bekannt, auf einer Welle eine Tragscheibe zu befestigen, die eine Deckscheibe aufweist, wobei zwischen den beiden Scheiben Schaufelgitter angeordnet sind. Die nach der axialen Zuströmung in die radiale Richtung umgelenkte Luft strömt zwischen den Schaufeln von innen nach außen.

Durch die Maßnahme nach Anspruch 2 wird sichergestellt, daß die aus den an der Schwungscheibe ausgebildeten Radial-Kanälen austretende Luft in eine den Bremslagerschild an seinem Außenumfang intensiv kühlende Strömung umgelenkt wird.

Durch die Maßnahmen nach Anspruch 3 wird erreicht, daß die Kühlung des Bremslagerschildes noch zusätzlich intensiviert wird. Die weitere Ausgestaltung nach Anspruch 4 stellt sicher, daß gerade die Stirnseite des Bremslagerschildes einer besonders intensiven Kühlung unterzogen wird, wobei andererseits erreicht wird, daß ein Teil der erwärmten Luft vorher austreten kann, der eventuell mit durch die Kühlkanäle gesaugte Flusen herausträgt. Durch die weitere Ausgestaltung nach Anspruch 5 wird erreicht, daß ähnlich wie bei der Schwungscheibe auch am Bremslagerschild die Kühlluft bis nahe an die thermisch hochbelastete Bremsfläche herangebracht wird. Durch die weiteren Maßnahmen nach Anspruch 6 wird ermöglicht, daß auch die von der Kupplungsspule bzw. der Bremsspule erzeugte Wärme auf sehr direktem Wege an die Kühlluft abgegeben wird.

Durch die Maßnahmen nach Anspruch 7 wird noch weiter der Effekt verbessert, daß nur in sehr geringem Umfang Wärme an den das Statorgehäuse umgebenden Mantel abgegeben wird.

Weitere Vorteile und Merkmale der Erfindung ergeben sich aus der nachfolgenden Beschreibung eines Ausführungsbeispiels anhand der Zeichnung. Es zeigt,

Fig. 1 einen Antrieb gemäß der Erfindung, bestehend aus Motor und Brems-Kupplungs-Einheit, im axialen Längsschnitt,

Fig. 2 die Kupplungs-Brems-Einheit nach Fig. 1 in vergrößertem Maßstab,

Fig. 3 einen Teilausschnitt aus der Brems-Kupplungs-Einheit, und

Fig. 4 einen weiteren Teilausschnitt aus der Brems-Kupplungs-Einheit.

Der in der Zeichnung dargestellte Antrieb besteht aus einem Motor 1 und einer Brems-Kupplungs-Einheit 2. Der Motor 1 weist ein im wesentlichen zylindrisches Statorgehäuse 3 auf, in dem in üblicher Weise ein aus Stator-Wicklungen 4 und einem Stator-Blechpaket 5 gebildeter Stator konzentrisch angeordnet ist. Ebenfalls konzentrisch zur Mittel-Längsachse 6 ist ein Rotor 7 angeordnet, der auf einer Motorwelle 8 angebracht ist. Letztere ist in Lagerschilden 9, 10 gelagert. Der der Brems-Kupplungs-Einheit 2 abgewandte Lagerschild 10 ist einstückig als Gußteil mit dem Statorgehäuse 3 ausgebildet. In seiner Lagerbohrung 11 ist die Motorwelle 8 mittels eines Wälzlagers 12, bei dem es sich um ein Radial-Axial-Kugellager handelt, gelagert, wobei der Innenring 13 des Wälzlagers 12 gegen einen Bund 14 der Motorwelle 8 abgestützt ist. Auf der axial anderen Seite ist der Außenring 15 des Wälzlagers 12 über eine vorgespannte Schrauben-Druckfeder 16 gegen einen einstückig mit dem Lagerschild, 10 ausgebildeten Anschlagring 17 abgestützt, so daß einerseits das Wälzlager 12 gegen ein axiales Wandern auf der Motorwelle 8 gesichert ist, andererseits aber axiale Nachstellbewegungen der Motorwelle 8 im Rahmen des von der Feder 16 vorgegebenen, Spiels möglich sind.

Der Lagerschild 9 ist einstückig mit einem annähernd zylindrischen Gehäuse 18 ausgebildet und über Zentrieranschläge 19 mit dem Statorgehäuse 3 konzentrisch zur Achse 6 mittels Schrauben 20 verbunden. In der Lagerbohrung 21 dieses Lagerschildes 9 ist die Motorwelle 8 ebenfalls über ein als Radial-Axial-Kugellager ausgebildetes Wälzlager 22 abgestützt. Auch hier liegt der Innenring 23 des Wälzlagers 22 gegen einen Bund 24 der Motorwelle 8 an, während der Außenring 25 des Wälzlagers 22 auf der anderen, also auf der der Einheit 2 zugewandten Seite über eine vorgespannte Schrauben-Druck-Feder 26 gegen einen in der Lagerbohrung 21 festgelegten Sicherungsring 27 abgestützt ist, der also die gleiche Widerlagerfunktion hat, wie der Anschlagring 17 im Lagerschild 10. Die Funktion der Feder 26 besteht darin, den Außenring 25 des Wälzlagers 22 in axialer Richtung zu belasten, um so eine Geräuschentwicklung zu unterbinden. Wenn ein Außenring eines Wälzlagers keine Anlage hat, neigt nämlich ein solches Wälzlager zum Schwingen und damit zur Geräuschbildung. Die Kraft der Feder 26 muß deutlich geringer sein als die der Feder 16, um deren Funktion nicht aufzuheben.

Auf dem Wellenzapfen 28 der Motorwelle 8, auf dem das Wälzlager 22 angeordnet ist, ist auch eine Schwungscheibe 29 mittels einer Feder-Nut-Verbindung 30 drehfest festgelegt. Die Schwungscheibe 29 liegt mit der freien Stirnseite ihrer Nabe 31 gegen den Innenring 23 des Wälzlagers 22 an und ist mittels einer auf einen Gewindezapfen 32 des Wellenzapfens 28 aufgeschraubten Mutter 33 axial fest gegen den Innenring 23 gespannt, wodurch sie gleichzeitig axial gegenüber der Motorwelle 8 festgelegt ist. Die aus dem Rotor 7, der Motorwelle, 8 samt Wälzlagern 12, 22 und der Schwungscheibe 29 gebildete Einheit ist also in Richtung der Mittel-Längsachse 6 verschiebbar, wobei jeweils die in Verschieberichtung liegende Feder 16 bzw. 26 eine Gegenkraft ausübt.

Das Gehäuse 18 ist auf der dem Motor 1 abgewandten Seite mittels eines Bremslagerschildes 34 abgeschlossen, der mittels Zentrierbünden 35 gegenüber dem Gehäuse 18 zentriert und damit koaxial zur Achse 6 angeordnet ist. Der Bremslagerschild 34 ist mittels Schrauben 36 an einem entsprechenden Flansch 37 des Gehäuses 18 befestigt.

Eine koaxial zur Mittel-Längsachse 6 angeordnete Abtriebswelle 38 ist einerseits in einer Lagerbohrung 39 des Bremslagerschilders 34 und andererseits in einer Lagerbohrung 40 in der Schwungscheibe 29 gegenüber letzterer frei drehbar gelagert. Auch die Abtriebswelle 38 ist über jeweils als Radial-Axial-Kugellager ausgebildete Wälzlager 41, 42 in den Lagerbohrungen 39, 40 gelagert. Zwischen den Wälzlagern 41, 42 ist eine Kupplungs-Brems-Scheibe 43 an der Abtriebswelle 38 drehfest angebracht. Die Kupplungs-Bremsscheibe 43 weist einen äußeren Ankerring 44 aus magnetischem Material auf. An diesem Ankerring 44 ist eine Federscheibe 45 im Bereich ihres äußeren Randes mittels Schrauben 46 befestigt. Im Bereich ihres inneren Randes ist die Federscheibe 45 mittels Schrauben 47 an einem radial von der Abtriebswelle 38 vorstehenden Ringbund 48 befestigt. Diese Art der Befestigung mittels einer dünnen Federscheibe 45 ermöglicht Bewegungen des Ankerrings 44 in Richtung der Achse 6 und koaxial zu dieser.

Auf der der Schwungscheibe 29 zugewandten Seite des Ankerrings 44 ist ein ringförmiger, als Kupplungsbelag 49 dienender Reibbelag durch Kleben befestigt. Diesem ist eine entsprechende ringflächenförmige Kupplungsfläche 50 an der zugewandten Stirnseite der Schwungscheibe 29 zugeordnet. Der Ankerring 44 weist an seinem äußeren Umfang einen axial zur Schwungscheibe 29 vorstehenden Ringsteg 51 auf, der sich mit einem geringen Axialspalt a von nur einigen Zehntel Millimetern bis zur Schwungscheibe 29 hin erstreckt. Der ringförmige Kupplungsbelag 49 liegt mit seinem äußeren Umfang etwa gegen den Innenumfang des Ringsteges 51 an.

Der Bremslagerschild 34 weist ein Kupplungsspulengehäuse 52 auf, das mit einem geringen Radialspalt b von ebenfalls nur einigen Zehntel Millimetern den Ankerring 44 radial umgibt und mit einem radial äußeren ringförmigen Gehäusesteg 53 unter Freilassungeines ebenfalls nur einige Zehntel Millimeter breiten Radialspaltes c, einen der Kupplungsfläche 50 benachbarten radialen Umfangsabschnitt 54 der Schwungscheibe 29 umgibt. In dem Kupplungsspulengehäuse 52 des ortsfesten Bremslagerschildes 34 ist eine ringförmige elektromagnetische Kupplungsspule 55 angeordnet, bei deren Erregung, ein Magnetpfad 56 vom Kupplungsspulengehäuse 52 durch den Gehäusesteg 53, den Radialspalt c, den Umfangsabschnitt 54 der Schwungscheibe 29, die Schwungscheibe 29, den Axialspalt a, den Ringsteg 51 des Ankerrings 44, den Radialspalt b zurück zum Kupplungsspulengehäuse, 52 geschlossen wird. Hierdurch wird die Kupplungs-Brems-Scheibe 43 mit ihrem Kupplungsbelag 49 gegen die Kupplungsfläche 50 der Schwungscheibe 29 gedrückt, wodurch wiederum die Abtriebswelle 38 mit der Motorwelle 8 gekuppelt wird.

Auf der der Schwungscheibe 29 abgewandten Seite ist der Ankerring 44 mit einem als Bremsbelag 57 dienenden Reibbelag versehen, der ebenfalls durch Kleben od.dgl. am Ankerring 44 befestigt ist. Ihm ist im Bremslagerschild 34 eine ringflächenförmige Bremsfläche 58 zugeordnet. Während der Kupplungsbelag 49 auf der Seite des Ankerrings 44 angebracht ist, auf der die Federscheibe 45 befestigt ist, ist der ringscheibenförmige Bremsbelag 57 in einer diesem angepaßten ringförmigen Ausnehmung 59 des Ankerrings 44 angeordnet. Der aus magnetischem Material bestehende Ankerring erstreckt sich von der Ausnehmung 59 radial nach innen bis in die Nähe des Ringbundes 48, wodurch eine ringflächenförmige Magnetübertragungsfläche 60 am Ankerring 44 geschaffen wird, die unter Freilassung eines nur wenige Zehntel Millimeter breiten axialen Spaltes d der radial innerhalb der Bremsfläche 58 liegenden und mit dieser fluchtenden Bremsspulengehäusefläche 61 gegenüberliegt. Im Bremslagerschild 34 ist ein Bremsspulengehäuse 62 ausgebildet, das stirnseitig durch die Bremsspulengehäusefläche 61 abgeschlossen wird. In diesem Bremsspulengehäuse 62 ist eine ringförmige Bremsspule 63 derart angeordnet, daß einerseits radial innerhalb der Bremsspule 63 und radial außerhalb der Bremsspule 63 aber noch innerhalb des Bremsbelages 57 jeweils Magnetfluß übertragen werden kann. Bei Erregung der Bremsspule 63 bildet sich also ein Brems-Magnetpfad 64 aus, von dem ein Teilpfad 64a radial außerhalb der Bremsspule 63 durch das Bremsspulengehäuse 62, den Axialspalt d zwischen der Bremsspulengehäusefläche 61 und der Magnetübertragungsfläche 60 -jeweils zwischen dem Bremsbelag 57 und der Bremsspule 63 — den Ankerring, und zwar radial nach innen, und den Axialspalt d radial innerhalb der Bremsspule 63 zurück in das Bremsspulengehäuse 62 verläuft. Ein anderer Teilpfad 64b des Brems-Magnetpfades 64 verläuft radial nach außen bis in das Kupplungsspulengehäuse 52, durch den Radialspalt b und radial durch den Ankerring 44 nach innen, wo sich die beiden Teilpfade 64a und 64b wieder treffen.

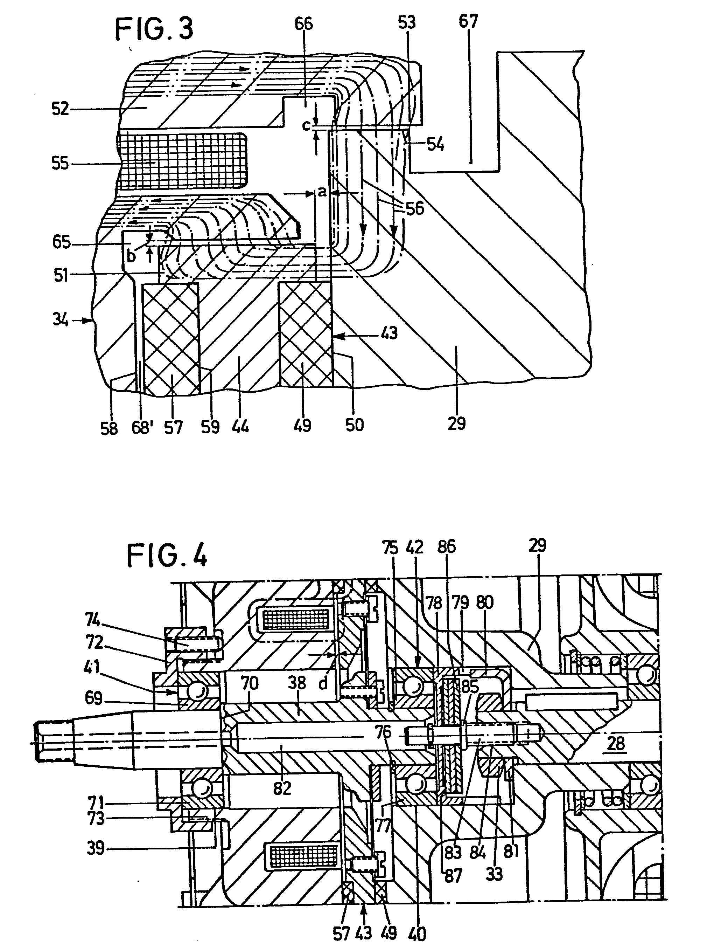

Wie sich aus Fig. 3 ergibt, ist das Kupplungsspulengehäuse 52 im Bereich des Ringsteges 51 auf der dem Bremsbelag 57 zugewandten Bereich mit einer Axial-Radial-Hinterschneidung 65 versehen, die sich derart weit erstreckt, daß der Ringsteg 51 sich etwa einen Millimeter in Richtung zum Bremslagerschild 34 in diese Hinterschneidung 65 hineinerstreckt. Die radiale und axiale Erstreckung dieser Hinterschneidung von dem jeweils nächstbenachbarten Bereich des Ringsteges 51 ist jeweils größer als 0,5mm, bevorzugt sogar mehr als 1mm, so daß vom Kupplungsspulengehäuse 52 durch den Radialspalt b nur radial gerichtete Magnetpfade verlaufen können. Ein "Kleben" des Ringsteges 51 des Ankerrings 44 an dem Bremslagerschild 34 bei Erregen der Kupplungsspule 55 ist also ausgeschlossen.

Durch den Axialspalt a verläuft der Kupplungs-Magnetpfad 56 ausschließlich in axialer Richtung, so daß hier die entsprechenden Kupplungskräfte erzeugt werden. Im Bereich des Radialspaltes c zwischen dem Umfangsabschnitt 54 der Schwungscheibe 29 und dem Gehäusesteg 53 des Kupplungsspulengehäuses 52 verläuft der Kupplungs-Magnetpfad 56 wiederum ausschließlich radial, so daß auf die axial gegen die Federn 16 bzw. 26 verschiebbare Einheit aus Rotor 7, Motorwelle 8 und Schwungscheibe 29 nur vernachlässigbare axiale, verschiebend wirkende Kräfte ausgeübt werden. Dies wird durch zusätzliche Ausnehmungen erreicht. Eine Ausnehmung 66 erstreckt sich im Kupplungsspulengehäuse 52 radial nach außen, wobei die Schwungscheibe 29 sich mit ihrem Umfangsabschnitt 54 um etwa 0,5 bis 1mm axial in diese Ausnehmung 66 hinein erstreckt.

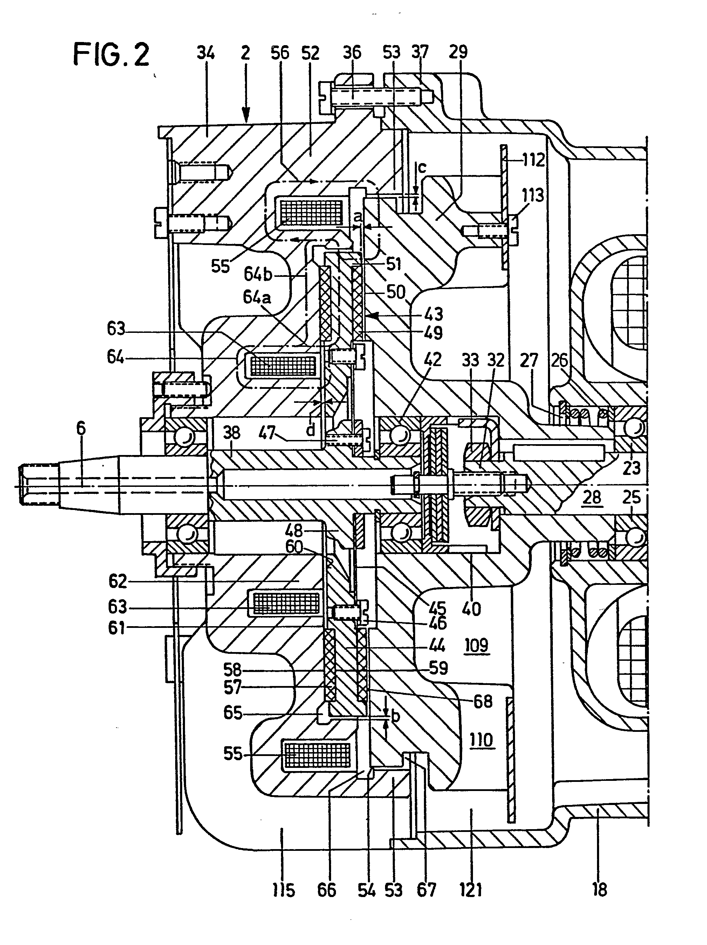

Die andere Ausnehmung 67 ist in der Schwungscheibe 29 ausgebildet und begrenzt den zylindrischen Umfangsabschnitt 54 auf der der Kupplungs-Brems-Scheibe 43 abgewandten Seite. Der Gehäusesteg 53 ragt axial in diese Ausnehmung 67 hinein. Durch den geringfügigen Versatz des Umfangsabschnitts 54 zur Kupplungs-Brems-Scheibe hin ist sichergestellt, daß bei einer Erregung der Kupplungsspule 55 auf keinen Fall in Richtung auf die Kupplungs-Brems-Scheibe 43 hinwirkende Kräfte auf die Schwungscheibe 29 ausgeübt werden. Vielmehr werden ganz geringe entgegengesetzt wirkende Kräfte auf die Schwungscheibe 29 ausgewirkt. Es ist daher sichergestellt, daß die Schwungscheibe 29 bei einer Erregung der Kupplungsspule 55 keinesfalls der Kupplungs-Brems-Scheibe 43 entgegenwandern kann. Die Kupplungsspule 55 und die Bremsspule 63 sind so geschaltet, daß der Kupplungs-Magnetpfad 56 und der Brems-Teilmagnetpfad 64b in dem Bereich des Kupplungsspulengehäuses 52, in dem beide verlaufen, einander entgegengesetzt gerichtet sind. Dies führt dazu, daß der magnetische Fluß schneller abgebaut und die Kupplungs-Brems-Scheibe schneller aus ihrer Anlage an der Schwungscheibe 29 zur Anlage am Bremswiderlager 34 und umgekehrt bewegt wird. Wie aus Fig. 2 hervorgeht, ist der Luftspalt 68 zwischen dem Kupplungsbelag 49 und der Kupplungsfläche 50 etwa 0,1 bis 0,2mm breit, d.h. beim Schalten von Bremsen auf Kuppeln bzw. umgekehrt hat der Ankerring 44 mit dem Bremsbelag 57 und dem Kupplungsbelag 49 nur jeweils einen sehr kurzen Weg zurückzulegen. In Fig. 3 ist in vergrößertem Maßstab der Luftspalt 68' zwischen dem Bremsbelag 57 und der Bremsfläche 58 dargestellt, der beim Kuppeln auftritt.

Der Innenring 69 des im Bremslagerschild abgestützten Wälzlagers 41 stützt sich auf seiner der Schwungscheibe 29 zugewandten Seite gegen einen Anschlagbund 70 der Abtriebswelle 38 ab. Der Außenring 71 dieses Wälzlagers 41 liegt mit seiner nach außen gerichteten Fläche gegen eine Einstellmutter 72 an, die auf ein die Lagerbohrung 39 umgebendes Außengewinde 73 am Bremslagerschild 34 aufgeschraubt ist. Die Einstellmutter 72 wird mittels einer Fixierschraube 74 in ihrer Lage relativ zum Bremslagerschild 34 gesichert. Durch die Einstellmutter 72 und die geschilderte Abstützung, des Wälzlagers 41 wird die Lage der Abtriebswelle 38 bezogen auf Verschiebungen aus der Brems-Kupplungs-Einheit 2 hinaus festgelegt.

Der Innenring 75 des in der Schwungscheibe 29 abgestützten Wälzlagers 42 liegt auf ihrer der Kupplungs-Brems-Scheibe 43 zugewandten Seite gegen einen an der Abtriebswelle 38 festgelegten Anschlag 76, der durch einen Sicherungsring gebildet wird, an. Die dem Motor 1 zugewandte Seite des Innenrings 75 liegt frei.

Die der Kupplungs-Brems-Scheibe 43 zugewandte Seite des Außenrings 77 des Wälzlagers 42 liegt frei. Die dem Motor 1 zugewandte Seite des Außenrings 77 liegt gegen eine Haltehülse 78 an, die in der Lagerbohrung 40 angeordnet ist. Diese Haltehülse 78 weist einen Schlitz 79 auf, in den eine Lasche 80 eines mittels der Mutter 33 festgeklemmten Sicherungsblechs 81 hineinragt, so daß diese Haltehülse 78 gegenüber der Schwungscheibe 29 unverdrehbar ist. Die Abtriebswelle 38 weist eine durchgehende Bohrung 82 auf, durch die eine Einstellschraube 83, die in eine Gewindebohrung 84 im Wellenzapfen 28 geschraubt ist, mittels eines Schraubendrehers od.dgl. verdreht werden kann. Durch eine derartige Verdrehung der Einstellschraube 83 wird deren axiale Lage bzw. insbesondere die axiale Lage eines an ihr angebrachten radial vorspringenden Anschlagbundes 85 relativ zur Motorwelle 8 und damit zur Schwungscheibe 29 verstellt. Gegen diesen Anschlagbund 85 stützt sich eine von mehreren Bimetallscheiben 86 ab, die auf der Einstellschraube 83 angeordnet sind. Die entgegengesetzte, also der Kupplungs-Brems-Scheibe 43 nächstliegende Bimetallscheibe 86 stützt sich mit ihrem Außenrand gegen einen Ringrand 87 der Haltehülse 78 ab. Durch Hineinschrauben oder Herausschrauben der Einstellschraube 83 in bzw. aus dem Wellenzapfen 28 wird die axiale Lage der Schwungscheibe 29 relativ zur Abtriebswelle 38 verändert. Da die Motorwelle 8 samt Schwungscheibe 29 von der Druck-Feder 16 ständig in Richtung zur Kupplungs-Brems-Scheibe 43 hin gedrückt wird, kann also mit der Einstellmutter 72 die Ruhe-Anpreßkraft der Kupplungs-Brems-Scheibe 43 mit ihrem Bremsbelag 57 gegen die Bremsfläche 58 des Bremslagerschildes 34 eingestellt werden, während durch Verstellen der Einstellschraube 83 der Luftspalt 68 zwischen Kupplungsbelag 49 und der Kupplungsfläche 50 eingestellt wird. Die Kupplungs-Brems-Scheibe 43 liegt nämlich dann, wenn weder die Kupplungsspule 55 noch die Bremsspule 63 erregt sind, mit einer auf die geschilderte Weise einstellbaren Vorspannung gegen die Bremsfläche 58 des Bremslagerschildes 34 an. Wenn der Kupplungsbelag 49 und auch der Bremsbelag 57 aufgrund der thermischen Belastung bei hohen Schaltspielen quellen, dann führt dies auch zu einer entsprechenden Erwärmung der Schwungscheibe 29. Diese Wärme wird zu den Bimetallscheiben 86 geleitet und führt dazu, daß diese sich verbiegen, wobei diese Verbiegung entsprechend ihrer Anordnung jeweils gegeneinandergerichtet ist. Dies führt dazu, daß die Einstellschraube 83 samt der Motorwelle 8 und der Schwungscheibe 29 in Richtung zum Motor 1 gegen die Kraft der Feder 16 verschoben wird. Die durch das erwähnte thermisch bedingte Quellen von Kupplungsbelag 49 und Bremsbelag 57 bedingte Verringerung des Luftspaltes 68 wird also kompensiert. Eine solche Kompensation ist notwendig, da der Luftspalt 68 in der Regel nur etwa 0,1mm betragen soll, um beim Schalten der Kupplungs-Brems-Scheibe 43 Schlaggeräusche zu verhindern. Ein so kleiner Luftspalt 68 muß aber genau eingehalten werden, darf sich also während des Betriebes nicht noch weiter verringern.

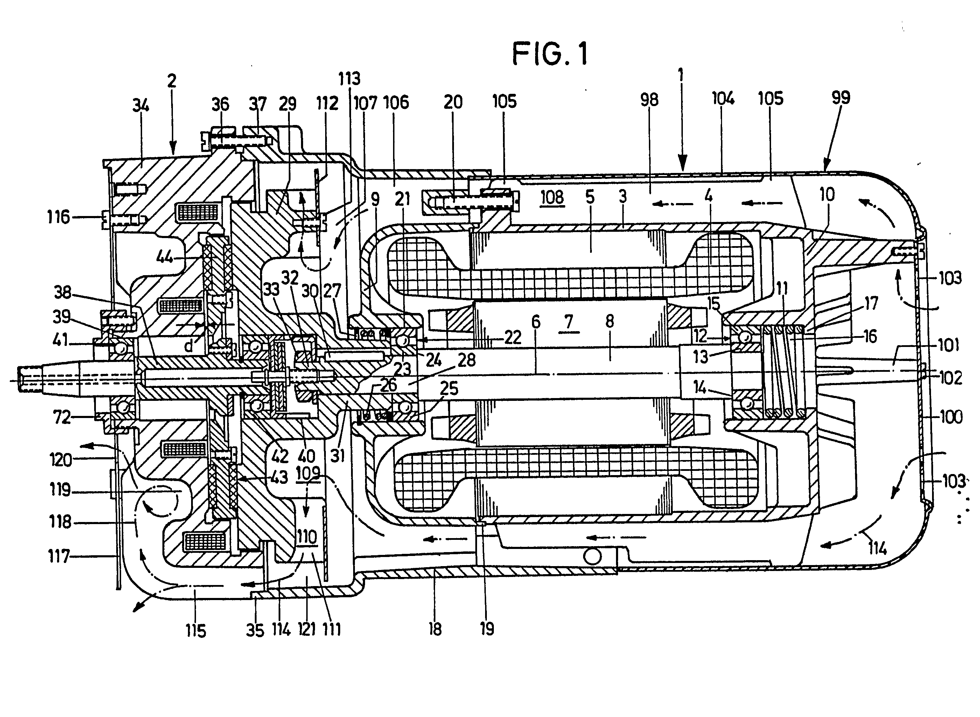

Wie insbesondere aus Fig. 1 hervorgeht, sind auf dem Statorgehäuse 3 über dessen Umfang verteilt radial abstehende, parallel zur Achse 6 verlaufende Kühlrippen 98 angebracht. Über das gesamte Statorgehäuse 3 ist eine die Kühlrippen 98 einschließende topfförmige Abdeckhaube 99 geschoben, die mit ihrem Boden 100 gegen Abstandshalter 101 anliegt, die einstückig mit dem Lagerschild 10 ausgebildet sind. An diesen Abstandshaltern 101 ist die Abdeckhaube 99 mittels Schrauben 102 befestigt. Der Boden 100 der Abdeckhaube 99 weist Öffnungen 103 auf, durch die Kühlluft eintreten kann. Der im wesentlichen zylindrische Mantel 104 der Abdeckhaube 99 liegt auf Vorsprüngen 105 der Kühlrippen 98 auf, so daß diese nur annähernd punktweise Berührungen zur Abdeckhaube 99 haben. Eine direkte Wärmeleitung vom Statorgehäuse 3 über die Kühlrippen 98 zur Abdeckhaube 99 findet also nur in sehr geringem Umfang statt; die Abdeckhaube 99 erwärmt sich also nur geringfügig.

Den Kühlrippen 98 entsprechende Kühlrippen 106 sind auch in dem Gehäuse 18 ausgebildet. Sie erstrecken sich teilweise radial durchgehend zwischen dem Lagerschild 9 und dem Gehäuse 18, da sie gleichzeitig den Lagerschild 9 abstützen. Zwischen dem Lagerschild 9 und der Schwungscheibe 29 ist ein Freiraum 107, in den die zwischen den Rippen 98 und dem Statorgehäuse 3 bzw. dem Mantel 104 der Abdeckhaube 99 bzw. den Kühlrippen 106, dem Lagerschild 9 und dem Gehäuse 18 gebildeten Kühlkanäle 108 einmünden.

In der Schwungscheibe 29 ist auf ihrer dem Motor 1 zugewandten Seite ein Ansaugraum 109 in Form eines zum Freiraum 107 hin offenen Ringraumes ausgebildet, der die Nabe 31 der Schwungscheibe 29 umgibt. Aus diesem Ansaugraum 109 münden Radialkanäle 110 nach außen. Diese werden durch sich radial und axial erstreckende Rippen 111, die einstückig mit der Schwungscheibe 29 ausgebildet sind begrenzt. Auf ihrer der Schwungscheibe 29 abgewandten Seite ist an diesen Rippen 111 ein ringscheibenförmiger Luftleitring 112 mittels Schrauben 113 befestigt, der die Radialkanäle 110 zum Motor 1 hin begrenzt. Der auf die geschilderte Weise aufgebaute Lüfter ist ein Axial-Radial-Gebläse.

Die durch die Öffnungen 103 angesaugte Kühlluft strömt entsprechend den Strömungsrichtungspfeilen 114 durch die Kühlkanäle 108, den Freiraum 107, den Ansaugraum 109 und die Radialkanäle 110. Da wie aus Fig. 1 ersichtlich ist der Ansaugraum 109 bis nahe an die Kupplungsfläche 50 heranreicht, ist eine besonders gute Kühlung im kritischen Bereich der Kupplungsfläche 50 gewährleistet.

Aus den Radialkanälen 110 strömt die Luft zwischen Kühlrippen 115, die am Außenumfang und an der Stirnseite des Bremslagerschildes 34 ausgebildet sind. An der äußeren Stirnseite des Bremslagerschildes 34 ist mittels Schrauben 116 ein ringförmiges Abdeckblech 117 angebracht, so daß entsprechend dem Strömungspfeil 118 ein Teil der zwischen den Kühlrippen 115 entlangströmenden Luft radial nach innen abgelenkt wird und die Stirnseite des Bremslagerschildes 34 kühlt. Benachbart zur Bremsfläche 58 des Bremslagerschildes 34 und radial zwischen der Kupplungsspule 55 und der Bremsspule 63 weist der Bremslagerschild 34 eine jeweils bis in die Nähe der Kupplungsspule 55, der Bremsspule 63 und der Bremsfläche 58 reichende, als Verwirbelungskammer dienende ringförmige Ausnehmung 119, in der die Luft gemäß dem Strömungspfeil 118 verwirbelt wird. Sie tritt dann durch eine radial innenliegende Austrittsöffnung 120 im Abdeckblech 117 in der Nähe der Einstellmutter 72 aus.

Die Umlenkung der aus den Radialkanälen 110 in radialer Richtung austretenden Kühlluft in eine Strömung parallel, zur Achse 6 zwischen den Kühlrippen 115 erfolgt in einem Umlenkabschnitt 121, der außen durch das Gehäuse 18 begrenzt wird.

**Patentansprüche**

1. Elektromotorischer Regel- und Steuerantrieb, insbesondere für Industrie-Nähmaschinen, umfassend einen ständig antreibbaren Motor (1) mit einer mittels einer Nabe (31) mit der Motorwelle (8) verbundenen Schwungscheibe (29) und eine mit diesem verbundene Brems-Kupplungs-Einheit (2), die eine drehfest mit einer Abtriebswelle (38) verbundene, wahlweise mit einem eine Bremsfläche (58) aufweisenden, undrehbaren Bremswiderlager (Bremslagerschild 34) bzw. der eine Kupplungsfläche (50) aufweisenden Schwungscheibe (29) in Reibungseingriff bringbare Kupplungs-Brems-Scheibe (43) aufweist, wobei das Statorgehäuse (3) des Motors (1) von durch einen äußeren Mantel (104) und Kühlrippen (106) begrenzten Kühlkanälen (108) umgeben ist, und wobei die Schwungscheibe (29) als Kühlluft durch die Kühlkanäle (108) saugendes Axial-Radial-Gebläse ausgebildet ist, dessen Ansaugraum (109) als ringförmige Ausnehmung in der Schwungscheibe (29) ausgebildet ist, dessen Schaufeln durch etwa radial verlaufende, an der Schwungscheibe (29) angebrachte Rippen (111) gebildet sind und dessen radialer Luftweg durch einen sich radial erstreckenden Luftleitring (112) begrenzt ist, dadurch gekennzeichnet, daß der Ansaugraum (109) als die Nabe (31) umgebender Ringraum ausgebildet ist, der bis dicht an die Kupplungsfläche (50) heranreicht, die radial gegenüber dem Außenumfang der Schwungscheibe (29) nach innen versetzt ist und sich radial teilweise mit dem Ansaugraum (109) überdeckt und daß aus dem Ansaugraum (109) Radialkanäle (110) ausmünden, die durch die Rippen (111) und den an diesen angebrachten, sich mit der Schwungscheibe (29) drehenden Luftleitring (112) begrenzt sind.

2. Antrieb nach Patentanspruch 1, dadurch gekennzeichnet, daß den Radialkanälen (110) der Schwungscheibe (29) ein Umlenkabschnitt (121) nachgeordnet ist, an den sich Kühlrippen (115) am Außenumfang des Bremslagerschildes (34) anschließen.

3. Antrieb nach Patentanspruch 2, dadurch gekennzeichnet, daß die Kühlrippen (115) am Bremslagerschild (34) sich bis auf dessen Stirnseite erstrecken.

4. Antrieb nach Patentanspruch 3, dadurch gekennzeichnet, daß die sich bis auf die Stirnseite des Bremslagerschildes (34) erstreckenden Kühlrippen (115) mit einem Abdeckblech (117) zumindest teilweise abgedeckt sind.

5. Antrieb nach Patentanspruch 3 und 4, dadurch gekennzeichnet, daß auf der Stirnseite des Bremslagerschildes (34) eine Ausnehmung (119) ausgebildet ist, die bis in die Nähe der Bremsfläche (58) reicht.

6. Antrieb nach Patentanspruch 5, dadurch gekennzeichnet, daß die Ausnehmung (119) bis zwischen eine Kupplungsspule (55) und eine Bremsspule (63) reicht, die im Bremslagerschild (34) angeordnet sind.

7. Antrieb nach Patentanspruch 1, dadurch gekennzeich net, daß die Kühlrippen (98) am Statorgehäuse (3) nur über einen kleinen Teil ihrer Länge gegen den Mantel (104) anliegen.

**Revendications**

1. Dispositif d'entrainement à vitesse réglable du type moteur électrique, notamment pour machines à coudre industrielles, comprenant un moteur (1) entraîné en continu, avec un volant d'inertie (29) relié à l'arbre moteur (8) par l'intermédiaire d'un moyeu (31), ainsi qu'un ensemble embrayage-frein (2) relié au moteur et présentant un disque d'embrayage et de freinage (43) qui est fixé par une liaison en rotation sur un arbre mené (38) et qui peut être couplé par friction, au choix, à une butée de frein non tournante (flasque de frein 34) présentant une surface de freinage (58), ou au volant d'inertie (29) présentant une surface d'embrayage (50), le carter de stator (3) du moteur (1) étant entouré de canaux de refroidissement (108) délimités par une enveloppe extérieure (104) et des ailettes de refroidissement (106), et le volant d'inertie (29) étant réalisé sous la forme d'un ventilateur axial-radial aspirant l'air de refroidissement au travers des canaux de refroidissement (108), dont l'enceinte d'aspiration (109) est constituée par un évidement de forme annulaire dans le volant d'inertie (29), dont les aubes sont constituées par des nervures (111) agencées sur le volant d'inertie (29) et s'étendant sensiblement en direction radiale, et dont le chemin radial de circulation d'air est délimité par un anneau déflecteur d'air (112) s'étendant radialement, dispositif caractérisé en ce que l'enceinte d'aspiration (109) est constituée par une chambre annulaire entourant le moyeu (31), et s'étendant jusqu'à proximité immédiate de la surface d'embrayage (50) qui est décalée radialement vers l'intérieur par rapport à la périphérie externe du volant d'inertie et dont l'étendue radiale se superpose partiellement à l'enceinte d'aspiration (109), et en ce que des canaux de d'orientation radiale (110) sortent de l'enceinte d'aspiration (109) et sont délimités par les nervures (111) ainsi que par un anneau déflecteur d'air (112) fixé sur ces nervures (111) et tournant avec le volant d'inertie (29).

2. Dispositif d'entrainement selon la revendication 1, caractérisé en ce que, en aval des canaux d'orientation radiale (110), est agencée une zone de déviation (121), à laquelle se raccordent des ailettes de refroidissement (115), sur la périphérie externe du flasque de frein (34).

3. Dispositif d'entrainement selon la revendication 2, caractérisé en ce que les ailettes de refroidissement (115) s'étendent sur le flasque de frein (34), jusque sur sa face frontale.

4. Dispositif d'entrainement selon la revendication 3, caractérisé en ce que les ailettes de refroidissement (115) s'étendant jusque sur la face frontale du flasque de frein (34), sont recouvertes au moins partiellement par une tôle de recouvrement (117).

5. Dispositif d'entrainement selon les revendications 3 et 4, caractérisé en ce que sur la face frontale du flasque de frein (34), est réalisé un évidement (119) qui s'étend jusqu'à proximité immédiate de la surface de freinage (58).

6. Dispositif d'entrainement selon la revendication 5, caractérisé en ce que l'évidement (119) s'étend entre une bobine d'embrayage (55) et une bobine de freinage (63) qui sont logées dans le flasque de frein (34).

7. Dispositif d'entrainement selon la revendication 1, caractérisé en ce que les ailettes de refroidissement (98) sur le carter de stator (3), ne s'appliquent contre l'enveloppe (104), que sur une petite partie de leur longueur.

## Claims

1. Electromotive variable-speed and control drive particularly for use in industrial sewing machines comprising a motor (1) capable of continuous drive with a disk flywheel (29) connected to the motor shaft (8) by means of a hub (31) and a brake-coupling unit (2), which is connected to the motor and which comprises a coupling-brake disk (43), which is connected to a drive shaft (38) non-rotatably with respect thereto and which is capable of being brought into friction engagement optionally with a non-rotatable brake bearing bracket (brake end shield 34) having a brake surface (58) or optionally with the disk flywheel (29) having a coupling surface (50), the stator frame (3) of the motor (1) being surrounded by cooling channels (108) confined by an outer shell (104) and cooling ribs (106) and the disk flywheel (29) forming an axial-radial blower sucking cooling air through the cooling channels (108), the suction area (109) of the axial-radial blower comprising an annular recess in the disk flywheel (29), the blades of the axial-radial blower forming radially extending ribs (111) provided at the disk flywheel (29), and the radial air flow of the axial-radial blower being confined by a radially extending air conductor ring (112), characterized in that the suction area (109) forms a ring space surrounding the hub (31) and extends close to the coupling surface (50), which is arranged radially offset inwards from the outer perimeter of the disk flywheel (29) and which radially partially overlaps the suction area (109), and in that, from the suction area (109), radial channels (110) open out, which are confined by the ribs (111) and the air conductor ring (112) secured to them and rotating with the disk flywheel (29).

2. Drive according to patent claim 1, characterized in that the radial channels (110) of the flywheel (29) are followed by a redirection segment (121), into which join cooling ribs (115) at the outer perimeter of the brake end shield (34).

3. Drive according to patent claim 2, characterized in that the cooling ribs (115) on said brake end shield (34) extend through to the front side of the brake end shield (34).

4. Drive according to patent claim 3, characterized in that the cooling ribs (115) extending through to the front side of the brake end shield (34) are at least partially covered by a sheet metal cover (117).

5. Drive according to patent claim 3 and 4, characterized in that the front side of the brake end shield (34) has a recess (119) which extends into the proximity of the brake surface (58).

6. Drive according to patent claim 5, characterized in that the recess (119) extends to an area between the coupling coil (55) and the brake coil (63) in the brake end shield (34).

7. Drive according to patent claim 1, characterized in that only a small part of the length of the cooling ribs (98) at the stator frame (3) rest against the outer shell (104).

# FIG. 1

EP 0 196 444 B1

# FIG.2

EP 0 196 444 B1

FIG.3

FIG.4

3